# EUROPÄISCHE PATENTSCHRIFT

(11) **EP 3 463 719 B1**
(45) Veröffentlichungstag und Bekanntmachung des Hinweises auf die Patenterteilung: **15.07.2020**
(21) Anmeldenummer: 17712974.9
(22) Anmeldetag: 22.03.2017
(51) Int. Cl.: B22F 3/105, B33Y 40/00, B33Y 10/00

(54) **VERFAHREN ZUM HERSTELLEN METALLISCHER BAUTEILE MITTELS GENERATIVER FERTIGUNG**
METHOD FOR ADDITIVE MANUFACTURING OF METALLIC COMPONENTS
PROCÉDÉ DE FABRICATION ADDITIVE DE COMPOSANTS MÉTALLIQUES

(30) Priorität: 24.05.2016 DE 102016006383
(43) Veröffentlichungstag der Anmeldung: 10.04.2019
(73) Patentinhaber: Messer Group GmbH, 65812 Bad Soden (DE)
(72) Erfinder: HILDEBRANDT, Dr. Bernd, 47918 Tönisvorst (DE); KAMPFFMEYER, Dr. Dirk, 52441 Linnich (DE)
(74) Vertreter: Münzel, Joachim R.
(86) Internationale Anmeldenummer: PCT/EP2017/056841
(87) Internationale Veröffentlichungsnummer: WO 2017/202520

(56) Entgegenhaltungen:
- WO-A1-2009/072935
- WO-A1-2013/098050
- US-A1- 2015 367 415
- ETIM S UDOETOK: "THERMAL CONDUCTIVITY OF BINARY MIXTURES OF GASES", FRONTIERS IN HEAT AND MASS TRANSFER, Bd. 4, Nr. 2, 20. September 2013 (2013-09-20), XP055372158, ISSN: 2151-8629, DOI: 10.5098/hmt.v4.2.3008

## Beschreibung

Die Erfindung betrifft ein Verfahren zum Herstellen metallischer Bauteile mittels generativer Fertigung, bei dem in einer evakuierten Strahlkammer eine Metallpulverlage erzeugt, durch Einwirkung eines Energiestrahls selektiv aufgeschmolzen oder aufgesintert wird und die Strahlkammer anschließend mit einem Kühlgas geflutet wird, wobei der aufgeschmolzene bzw. aufgesinterte Teil des Metallpulvers zu einer festen Werkstückkontur erstarrt.

In der heutigen Produktion zeichnet sich ein zunehmender Trend zu generativen Fertigungsverfahren (auch als "additive Fertigungsverfahren" bezeichnet) ab. Als solche werden hier allgemein Fertigungsverfahren bezeichnet, bei denen ein dreidimensionales Werkstück schichtweise aus einem Werkstoff aus Metall oder Kunststoff hergestellt wird. War deren Einsatz bislang überwiegend auf die Fertigung von Prototypen beschränkt, wird zunehmend ein großes Potenzial für den Einsatz in der Serienfertigung gesehen, insbesondere für Serien kleinerer Stückzahlen und/oder zur Herstellung komplexer dreidimensionale Bauteile, die beispielsweise in der Luft- und Raumfahrtechnik, der Automobilindustrie oder in der Medizintechnik Anwendung finden.

Bei den pulverbasierten generativen Fertigungsverfahren wird ein pulverförmiger Werkstoff in einer dünnen Schicht auf eine Arbeitsfläche aufgebracht. Mittels eines Energiestrahls, insbesondere eines Laserstahls oder eines Elektronenstrahls, wird das Material nach einer rechnergestützten Vorlage punktgenau aufgeschmolzen oder aufgesintert. Das aufgeschmolzene bzw. aufgesinterte Material bildet beim Wiedererstarren eine feste Kontur (hier auch "Werkstückkontur" genannt) aus, die mit zuvor und/oder nachfolgend auf gleiche Weise hergestellten Konturen zu einem Werkstück zusammengefügt wird. Auf diese Weise können insbesondere Formkörper aufgebaut werden, die eine teilweise hochkomplexe dreidimensionale Struktur aufweisen. Pulverbasierte generative Fertigungsverfahren sind beispielsweise Elektronenstrahlschmelzen (EBM), selektives Laserstrahlschmelzen (SLM) oder selektives Lasersintern (SLS).

Um das Werkstück vor negativen Einflüssen der Umgebungsatmosphäre zu schützen, finden pulverbasierte generative Fertigungsverfahren meist unter Schutzgas oder im Vakuum statt. Nach Beendigung der Fertigung muss das Werkstück bzw. die Werkstückkontur vor einer weiteren Bearbeitung abkühlen. Sofern ein Schutzgas zum Einsatz kommt, kann dieses den Prozess der Abkühlung unterstützen; bei additiven Fertigungsverfahren, die unter Vakuum durchgeführt werden, muss die gefertige Werkstückkontur gekühlt und die zuvor evakuierte Strahlkammer mit einem Gas auf Umgebungsdruck geflutet werden. Hierbei bietet sich insbesondere die Möglichkeit an, die Strahlkammer mit einem Inertgas zu fluten, das gleichzeitig für die Kühlung des Werkstücks bzw. der Werkstückkontur sorgt. Aufgrund seiner guten Wärmeleitungseigenschaften wird dazu derzeit vorwiegend Helium eingesetzt.

In der EP 3 006 139 A1 wird ein Verfahren zum schichtweisen Herstellen eines metallischen Werkstücks durch additive Fertigung vorgeschlagen, bei dem nacheinander Schichten eines pulverförmigen metallischen Werkstoffs bereitgestellt und mit einem Laserstrahl beaufschlagt werden, wobei jeweils ein Prozessgas zugeführt wird. Das Prozessgas dient dazu, die chemischen oder physikalischen Eigenschaften des geschmolzenen Metalls einer jeden Schicht gezielt zu beeinflussen; demzufolge werden unterschiedliche Schichten mit Prozessgasen unterschiedlicher Zusammensetzung beaufschlagt. Beispielsweise kommen dabei verschiedene Argon und Helium enthaltende Prozessgase zum Einsatz, wobei sich ein variierender Heliumanteil in jeweils unterschiedlichen Abkühlgeschwindigkeiten, Gefügeveränderungen und Materialverzügen der gefertigten Werkstückkonturen niederschlägt. Ein Prozessgas, das neben einem Inertgas auch Wasserstoff in einer Menge zwischen 0,01 Vol.-% und 50 Vol.-% enthält, schützt die Metallschmelze während der Laserstrahlbehandlung durch Abbinden von im Metallpulver vorhandenem Sauerstoff. Die Beaufschlagung der gefertigten Werkstückkonturen mit einem Kühlgas ist bei diesem Gegenstand jedoch nicht vorgesehen. Zudem können Erfahrungen in Zusammenhang mit derartigen Prozessgasen nicht ohne weiteres auf Fertigungsverfahren angewendet werden, die im Vakuum ablaufen.

Die WO 2015/155745 A1 beschreibt ein Verfahren zur Herstellung eines Werkstücks mittels additiver Fertigung, bei in einer evakuierten Strahlkammer eine Lage eines pulverförmigen Ausgangsstoffs bereitgestellt wird. Diese wird vorgewärmt und einem selektiven Aufschmelzprozess durch Beaufschlagung mit einem Energiestrahl im Vakuum unterzogen, wodurch sich eine Werkstückkontur ergibt, die durch sich durch Abkühlung festigen muss. Um den Kühlprozess zu beschleunigen, wird die Strahlkammer mit einem inerten Kühlgasstrom geflutet. Als Kühlgas kommt beispielsweise Helium oder Argon zum Einsatz.

Die Verwendung von Helium oder Argon als Kühlgas wurde wegen der inerten Eigenschaften der Edelgase bislang für erforderlich gehalten. Helium besitzt eine recht hohe Wärmeleitfähigkeit, die eine rasche Abkühlung ermöglicht, ist jedoch sehr teuer und am Markt nicht immer verfügbar. Argon ist kostengünstiger, besitzt jedoch eine weitaus geringere Wärmeleitfähigkeit, wodurch der Einsatz von Argon anstelle von Helium entweder zu einem verlangsamten Kühlvorgang führt oder aber eine erhebliche Steigerung des benötigten Kühlgasstroms erfordert. In der Praxis hat sich daher der Einsatz von reinem Helium oder eines zumindest überwiegend aus Helium bestehenden Gasgemisches als Kühlgas durchgesetzt, was allerdings mit den genannten Nachteilen verbunden ist.

In der US 2015/0367415 A1 werden Vorrichtungen sowie Verfahren zum dreidimensionalen Drucken beschrieben, bei denen eine Behandlungskammer nach dem Abschluss der Fertigung einer Werkstückkontur mit einem Kühlgas geflutet wird. Das Kühlgas kann dabei Argon, Stickstoff, Helium, Neon, Krypton, Xenon, Wasserstoff, Kohlendioxid, Kohlenmonoxid oder Sauerstoff enthalten.

Der Erfindung liegt die Aufgabe zugrunde, ein Verfahren zum Herstellen metallischer Bauteile mittels generativer Fertigung im Vakuum anzugeben, das gegenüber Verfahren nach dem Stande der Technik bei gleicher Qualität kostengünstiger ist und mit einer höheren Verarbeitungsgeschwindigkeit einhergeht.

Die Aufgabe der Erfindung wird durch ein Verfahren mit den Merkmalen des Patentanspruchs 1 gelöst. Vorteilhafte Ausgestaltungen der Erfindung werden im Unteranspruch 2 beansprucht.

Erfindungsgemäß erfolgt also in einem Prozess zur generativen Fertigung, insbesondere einem Elektronen- oder einem Laserstrahlschmelzverfahren, bei dem ein metallisches Werkstück aus Werkstückkonturen zusammengesetzt wird, die in einer evakuierten Strahlkammer schichtweise nacheinander gefertigt und durch eine im Anschluss an die Fertigung erfolgende Flutung der Strahlkammer mit einem Kühlgas gekühlt werden, dadurch, dass als Kühlgas ein wasserstoffhaltiges Gas oder Gasgemisch zum Einsatz kommt.

Die Erfindung bezieht sich also auf additive Fertigungsverfahren, die in einer Strahlkammer unter Vakuum durchgeführt werden und bei denen die Strahlkammer im Anschluss an die Fertigung einer jeden Werkstückkontur mit einem zugleich zur Kühlung der Werkstückkontur dienenden Kühlgas geflutet wird.

Überraschend hat sich gezeigt, dass im Kühlgas vorhandener Wasserstoff keinen oder nur einen vernachlässigbar negativen Einfluss auf die Oberfläche der gefertigten Werkstückkontur hat. Zudem übertrifft die Wärmeleitfähigkeit von Wasserstoff noch die des Heliums, sodass ein wasserstoffhaltiges Kühlgas gegenüber der Verwendung von reinem Helium zu einer beschleunigten Abkühlung der Werkstückkontur führt. Als "wasserstoffhaltiges Kühlgas" wird hier ein Gas oder Gasgemisch bezeichnet, das vollständig aus Wasserstoff (H₂) besteht oder aber neben Wasserstoff Beimengungen anderer Gase aufweist, insbesondere von inerten Gasen wie Helium (He), Argon (Ar) und/oder Stickstoff (N₂). Die Flutung der Strahlkammer mit dem Kühlgas erfolgt bevorzugt auf Umgebungsdruck (1 bar) nach dem Abschluss der Fertigung der Werkstückkontur. Zu diesem Zeitpunkt ist das aufgeschmolzene Material der Werkstückkontur zumindest an seiner Oberfläche offenbar bereits so weit verfestigt, dass das wasserstoffhaltige Kühlgas keinen nennenswerten Einfluss auf die metallurgischen Eigenschaften des Werkstücks mehr hat. Nachdem die Werkstückkontur auf eine vorgegebene Zieltemperatur abgekühlt wurde, wird eine neue Metallpulverlage bereitgestellt und die Strahlkammer zwecks Herstellung der nächsten Kontur erneut evakuiert.

Das Kühlgas enthält neben Wasserstoff auch Helium, Argon und/oder Stickstoff. Dabei kann es sich um ein Zwei- Drei- oder Vierkomponentengemisch handeln, in dem neben Wasserstoff eines oder mehrere der Gase Helium, Argon oder Stickstoff enthalten sind. Besonders bevorzugt sind ein Gemisch aus Wasserstoff und Helium sowie ein Gemisch, das neben Wasserstoff und Helium Argon und/oder Stickstoff enthält, wobei der Anteile von Argon und/oder Stickstoff im Gemisch bevorzugt den der geringer vorhandenen Komponente aus He oder H₂ nicht übersteigen sollte.

Eine erste nicht erfindungsgemäße Kühlgaszusammensetzung ist ein Gasgemisch mit einem Wasserstoffanteil von 97 Vol.-% bis 100 Vol.-%. Der Rest besteht aus Helium und/oder Argon und/oder Stickstoff, insbesondere aus Helium mit Anteilen von Argon und/oder Stickstoff. Auch dabei sind Zweikomponentengemische (Wasserstoff und Helium, Wasserstoff und Argon, Wasserstoff und Stickstoff) ebenso vorstellbar wie Dreikomponentengemische (Wasserstoff und Helium mit Anteilen von Argon oder Stickstoff) oder Vierkomponentengemische (Wasserstoff, Helium, Argon und Stickstoff). Ein erstes erfindungsgemäßes Kühlgas enthält zwischen 97 Vol.-% und 99,5 Vol.-% H₂, zwischen 0,5 Vol.-% und 3 Vol.-% He, Rest Ar und/oder N₂. Der hohe Wasserstoffgehalt führt aufgrund der hohen Wärmeleitfähigkeit von Wasserstoff zu einer besonders effizienten Kühlung.

Ein überwiegender Gehalt von Wasserstoff im Kühlgas verbessert die Effizienz der Kühlung aufgrund der hohen Wärmeleitfähigkeit des Wasserstoffs. Insbesondere in Fällen, in denen eine gewisse Wahrscheinlichkeit besteht, dass das Kühlgas in Kontakt mit Umgebungsluft kommt, ist jedoch eine zweite erfindungsgemäße Kühlgaszusammensetzung von Vorteil, die überwiegend, nämlich mit einem Anteil von 70 Vol.-% bis 99,5 Vol.-%, aus Helium, Argon, Stickstoff oder einem Gemisch aus zweien oder dreien dieser Gase besteht und einen vergleichsweise geringen Wasserstoffanteil von 0,5 Vol.-% bis 30 Vol.-% aufweist. Ein etwaiger Rest besteht aus Argon und/oder Stickstoff. Zum einen erhöht auch der vergleichsweise geringe Wasserstoffanteil die Wärmeleitfähigkeit des Kühlgases deutlich, zum anderen wird vermieden, dass es beim Vermischen des Kühlgases mit Umgebungsluft zur Überschreitung der Explosionsgrenze des Wasserstoffs kommt.

Das erfindungsgemäße Kühlgas kommt bevorzugt im Anschluss an ein unter Vakuum durchgeführtes Strahlschmelzverfahren zum Einsatz, bei dem als Energiestrahl ein Laserstrahl oder ein Elektronenstrahl verwendet wird. Insbesondere handelt es sich bei dem Strahlschmelzverfahren um selektives Elektronenstrahlschmelzen (EBM), selektives Laserstrahlschmelzen (SLM) oder selektives Laserstrahlsintern (SLS).

Die Vorteile des erfindungsgemäßen Verfahrens liegen insbesondere in der Verkürzung von Prozessnebenzeiten bei der generativen Fertigung aufgrund einer raschen Abführung der Prozesswärme aus der jeweils gefertigten Werkstückkontur, wobei gleichzeitig der Gefahr einer Oxidation des Werkstücks durch Sauerstoff aus der Umgebung zuverlässig begegnet wird. Zudem ist Wasserstoff wesentlich kostengünstiger und zuverlässiger verfügbar als das bislang überwiegend eingesetzte Helium.

## Patentansprüche

1. Verfahren zum Herstellen metallischer Bauteile mittels generativer Fertigung, bei dem in einer evakuierten Strahlkammer eine Metallpulverlage erzeugt, durch Einwirkung eines Energiestrahls selektiv zu einer Werkstückkontur aufgeschmolzen oder aufgesintert wird und die Strahlkammer nach dem Abschluss der Fertigung der Werkstückkontur mit einem Kühlgas geflutet wird, wobei der aufgeschmolzene bzw. aufgesinterte Teil des Metallpulvers zu einer festen Werkstückkontur erstarrt, wobei als Kühlgas ein wasserstoffhaltiges Gas oder Gasgemisch zum Einsatz kommt,
**dadurch gekennzeichnet, dass** das Kühlgas
einen Wasserstoffanteil von 0,5 Vol.-% bis 30 Vol.-%, Rest Helium und/oder Argon und/oder Stickstoff enthält,
oder
einen Wasserstoffanteil von 97 Vol.-% bis 99,5 Vol.-%,von 0,5 Vol.-% bis 3 Vol.-% Helium, Rest Argon und/oder Stickstoff, enthält.

2. Verfahren nach Anspruch 1, **dadurch gekennzeichnet, dass** als Energiestrahl ein Laserstrahl oder ein Elektronenstrahl zum Einsatz kommt.

## Claims

1. Process for the production of metallic components by means of generative manufacture, where a metal powder layer is produced in an evacuated irradiation chamber and is selectively melted or sintered via exposure to an energy beam to give a workpiece contour, and after manufacture of the workpiece contour has been concluded the irradiation chamber is flooded with a cooling gas, where the molten or sintered portion of the metal powder solidifies to give a solid workpiece contour, where a hydrogen-containing gas or gas mixture is used as cooling gas,
**characterized in that** the cooling gas
comprises a proportion of 0.5% by volume to 30% by volume of hydrogen, the remainder being helium and/or argon and/or nitrogen,
or comprises a proportion of 97% by volume to 99.5% by volume of hydrogen and 0.5% by volume to 3% by volume of helium, the remainder being argon and/or nitrogen.

2. Process according to Claim 1, **characterized in that** a laser beam or electron beam is used as energy beam.

## Revendications

1. Procédé pour la préparation d'éléments métalliques au moyen d'une fabrication générative, dans lequel une couche de poudre métallique est produite dans une chambre à rayonnement sous vide et est fondue ou frittée par l'action d'un faisceau d'énergie sélectivement en un contour de pièce et la chambre à rayonnement est inondée avec un gaz de refroidissement après la fin de la fabrication du contour de pièce, la partie fondue ou frittée de la poudre métallique figeant en un contour de pièce solide, un gaz ou un mélange de gaz contenant de l'hydrogène étant utilisé en tant que gaz de refroidissement,
**caractérisé en ce que** le gaz de refroidissement contient une proportion d'hydrogène de 0,5 % en volume à 30 % en volume, et le reste étant de l'hélium et/ou de l'argon et/ou de l'azote,
ou contient une proportion d'hydrogène de 97 % en volume à 99,5 % en volume, de 0,5 % en volume à 3 % en volume d'hélium, le reste étant de l'argon et/ou de l'azote.

2. Procédé selon la revendication 1, **caractérisé en ce qu'**un faisceau laser ou un faisceau d'électrons est utilisé en tant que faisceau d'énergie.
